# FASCICULE DE BREVET EUROPEEN

(11) **EP 3 174 958 B1**
(45) Date de publication et mention de la délivrance du brevet: **16.05.2018**
(21) Numéro de dépôt: 15732628.1
(22) Date de dépôt: 25.06.2015
(51) Int. Cl.: C10G 75/00, C10G 7/12

(54) **PROCEDE DE FRACTIONNEMENT DE CHARGES D'HYDROCARBURES METTANT EN UVRE UN DISPOSITIF COMPRENANT DES ZONES DE FOND PERMUTABLES**
VERFAHREN ZUR FRAKTIONIERUNG VON KOHLENWASSERSTOFFEINSÄTZEN UNTER VERWENDUNG EINER VORRICHTUNG MIT PERMUTABLEN BODENZONEN
METHOD FOR FRACTIONATING HYDROCARBON FEEDSTOCKS USING A DEVICE COMPRISING PERMUTABLE BOTTOM ZONES

(30) Priorité: 30.07.2014 FR 1457373
(43) Date de publication de la demande: 07.06.2017
(73) Titulaire: IFP Energies nouvelles, 92500 Rueil-Malmaison (FR)
(72) Inventeur: BRUNEAU, Thomas, F-92800 Puteaux (FR); MAJCHER, Jerome, F-69007 Lyon (FR); FEUGNET, Frederic, F-69004 Lyon (FR); LECOZ, Jean-François, F-78100 Saint Germain en Laye (FR)
(86) Numéro de dépôt international: PCT/EP2015/064386
(87) Numéro de publication internationale: WO 2016/015930

(56) Documents cités:
- EP-A1- 2 647 690
- GB-A- 251 363
- US-A1- 2010 270 208

## Description

### Domaine de l'invention

L'invention se rapporte au domaine du fractionnement de charges d'hydrocarbures, et plus précisément à la distillation de charges d'hydrocarbures.

Les tentatives visant à atténuer les problématiques liées aux dépôts de type sédiments, coke et encore gomme dans les équipements de fractionnement, souvent situés en aval des unités de conversion, sont connues de l'homme du métier. Ces tentatives se sont traduites la plupart du temps par l'utilisation de divers moyens chimiques et mécaniques. Cependant, le dépôt de sédiments, de coke et/ou de gomme dans ces équipements reste un problème majeur dans la plupart des procédés de raffinage. Ces phénomènes sont souvent liés à la présence dans les charges à traiter d'entités chimiques susceptibles de provoquer un dépôt qui peut être un dépôt de sédiments, de coke et/ou de gommes sur les dispositifs de fractionnement desdites charges. Ces charges sont généralement des charges comprenant des fractions oléfiniques, des asphaltènes et/ou des impuretés soufrées et métalliques ou tout autre entité chimique susceptibles de provoquer un dépôt de sédiments, une formation de coke et/ou de gomme sur les dispositifs de fractionnement.

Les équipements de distillation de charges d'hydrocarbures répondent habituellement à une configuration de base consistant en la mise en oeuvre d'une seule unité de distillation. Or, il est connu que certaines charges d'hydrocarbures telles que par exemple les charges de pétrole brut ou les effluents de charges issus de procédés de conversion sont riches en impuretés, en sédiments et/ou en asphaltènes. Au fur et à mesure du cycle de séparation des fractions d'intérêt dans le dispositif de fractionnement, des dépôts de sédiments, de coke et/ou de gomme se forment sur les internes de la colonnes qui peuvent être des plateaux et/ou du garnissage structuré ou non structuré, les rebords du dispositif, et/ou les dispositifs de chauffe tels que les rebouilleurs de fond de colonne, modifiant ainsi le trafic de la colonne ainsi que le transfert thermique du système de chauffe. Cela se traduit par une perte de l'efficacité de séparation de la colonne et la nécessité d'augmenter l'apport thermique nécessaire à la séparation des différentes fractions d'intérêt jusqu'à ce que le fond du dispositif finisse par être complètement obstrué et ou que la perte d'efficacité de séparation soit trop importante. L'augmentation de la température du rebouilleur entraîne, de plus, une formation plus rapide de sédiments, de coke et/ou de gomme. Par conséquent, un arrêt du dispositif entier, ainsi qu'un arrêt total du procédé industriel en amont et en aval de celui-ci est alors nécessaire pour son nettoyage. Ces arrêts interviennent généralement à une fréquence de 1,5 mois environ tous les 3 à 6 mois voire plus, et nuisent à l'opérabilité du procédé de fractionnement, voire à l'opérabilité du procédé industriel entier.

GB 251363 divulgue un procédé de distillation. US 2010/0270208 et EP 2647690 divulguent un procédé de cokage retardés
Il existe donc toujours un besoin d'améliorer l'opérabilité des dispositifs de fractionnement des charges d'hydrocarbures, c'est-à-dire limiter voire éviter les arrêts des dispositifs de fractionnement.
Un objectif de la présente invention est d'étendre l'opérabilité du procédé de fractionnement des charges d'hydrocarbures.

Pour ce faire, la demanderesse a mis au point un procédé de fractionnement décrit par la revendication 1. Un tel procédé présente l'avantage de pouvoir fonctionner en continu sans arrêt pour le nettoyage des zones de fond. Ceci permet un gain de productivité, voire d'efficacité de séparation notables par rapport aux procédés de fractionnement connus de l'art antérieur.

### Description sommaire des figures

Les figures 1 à 2 décrivent un mode de réalisation du procédé (non-conforme) mis en oeuvre avec un dispositif comprenant une zone de fractionnement et deux zones de fond disposées en parallèle et opérant de manière cyclique et successive.
Les figures 3 à 6 décrivent un mode de réalisation du procédé (l'invention) mis en oeuvre avec un dispositif comprenant une zone de fractionnement et deux zones de fond disposées en série et opérant de manière cyclique et successive.

### Description de l'invention

L'invention concerne un procédé de fractionnement de charges d'hydrocarbures comme décrit par la revendication 1. Selon l'invention, la zone de fractionnement est entendue comme tout moyen de séparation connu de l'homme du métier mettant à profit les écarts de volatilité et de poids moléculaire entre les fractions de la charge à séparer.

Avantageusement, la zone de fractionnement selon l'invention comprend au moins une colonne de distillation de tout type, munie d'internes de séparation tels que des plateaux et/ou de garnissage structuré ou non structuré ou tout autre dispositif connus de l'homme du métier.
Avantageusement, la température de l'étage théorique du fond de la zone de fractionnement est inférieure à la température de formation de sédiments, de coke et/ou de gomme de la charge à traiter. Une telle limitation évite la formation de sédiments, de coke et/ou de gomme au fond de la zone de fractionnement. Cette température peut varier selon la charge à traiter et peut être déterminée par l'homme du métier au moyen de méthodes connues telles que par exemple et de manière non exhaustive : la teneur en Carbon Conradson pour les charges cokantes (ASTM D189/D482), la Maleic Anhydre Value (UOP326 - 08) et le Bromine Index (ASTM D1159) pour les charges présentant un potentiel de formation de gommes liées aux oléfines et/ou dioléfines, l'IP375 et IP390 pour les charges instables conduisant à la formation de sédiments.
De préférence, la zone de fractionnement comprend au moins une colonne de distillation.
La zone de fractionnement permet de séparer par exemple:
- une fraction gazeuse pouvant contenir des composés tels que l'H₂, l'H₂S, le NH₃, du méthane, de l'éthane, de l'éthylène ainsi que du gaz de pétrole liquéfié,
- une coupe essence ayant un point d'ébullition compris entre 20 et 150°C,
- une coupe gazole ayant un point d'ébullition compris entre 150 et 375°C,
- une coupe de gazole lourd ayant un point d'ébullition compris entre 220°C et 375°C.

Les zones de fond selon l'invention correspondent à une pluralité de zones de fond permutables aptes à recevoir des fractions de fond de la charge ayant une température d'ébullition supérieure à la température de l'étage théorique du fond de la zone de fractionnement. On entend par fraction de fond, toute fraction en pied de la zone de fractionnement. Avantageusement, les fractions de fond de la charge ont une température d'ébullition au moins supérieure à 40 °C, de préférence supérieure à 150°C, de manière préférée supérieure à 220°C et de manière plus préférée supérieur à 300°C dans des conditions de pression correspondant à la pression atmosphérique.

L'opérateur n'est pas tenu d'attendre le colmatage complet d'une zone de fond avant de rendre celle-ci non opérationnelle en la déconnectant de la zone de fractionnement et/ou des autres zones de fond. Le temps de colmatage peut correspondre à un temps choisi par l'opérateur.
Les zones de fond selon l'invention sont avantageusement munies d'internes de séparation tels que des plateaux, des garnissages structurés ou non structurés, connus de l'homme du métier permettant d'assurer la séparation des composés par contact des fractions liquides et vapeurs.

Dans un mode de réalisation non-conforme à l'invention que nous appellerons « mode de réalisation en parallèle», les zones de fond sont disposées en parallèle les unes par rapport aux autres. Dans ce mode de réalisation, au moins une première des zones de fond est connectée au fond de la zone de fractionnement de Dans un mode de réalisation conforme à l'invention que nous appellerons « mode de réalisation en série », les zones de fond permutables sont disposées et reliées en série. Dans ce mode de réalisation, les zones de fond sont connectées entre elles en série, et au moins une première zone de fond est connectée au fond de la zone de fractionnement, de manière à pouvoir opérer de manière cyclique et successive pendant une durée au plus égale au temps de colmatage de la zone de fond la plus éloignée de la zone de fractionnement selon un processus opératoire tel que lorsque la zone de fond la plus éloignée de la zone de fractionnement est colmatée ou avant son colmatage, celle-ci est déconnectée pour être nettoyée, pendant que le procédé de fractionnement de la charge continue avec la ou les autres zones de fond précédant ladite zone de fond, et lorsque le nettoyage de ladite zone de fond est terminée, celle-ci est rendue opérationnelle et directement connectée en tête de série, le processus opératoire étant reproduit à chaque fois que la zone de fond la plus éloignée de la zone de fractionnement est colmatée ou avant son colmatage. Les zones de fond sont connectées (reliées) entre elles, de préférence par des conduites munies de vannes et aptes à permettre le transit des fractions de fond d'une zone de fond à une autre. Les zones de fond sont aptes à recevoir des fractions de fond de la charge ayant une température d'ébullition supérieure à la température de l'étage théorique du fond de la zone de fractionnement et, lors du passage dans les zones de fond, les fractions de fond sont soumises à un strippage au moyen d'un flux gazeux. Un tel mode de réalisation présente l'avantage :
- soit, pour un nombre d'étages théoriques de séparation constant par rapport au mode de réalisation dit « mode de réalisation en parallèle », de pouvoir réduire la taille des zones de fond permutables, permettant ainsi une réduction substantielle des coûts d'investissements,
- soit par rapport au mode de réalisation dit « mode de réalisation en parallèle » d'augmenter le nombre d'étages théoriques de séparation pour bénéficier d'une efficacité de séparation supérieure dans la mesure où davantage d'étages théoriques de séparation sont disponibles. Cela se traduit par une économie de l'énergie à dépenser pour réaliser les séparations des différentes coupes et fractions d'intérêt.
Le mode de réalisation en série permet une optimisation de l'utilisation des zones de fond, dans la mesure où hors période de nettoyage de la zone de fond la plus éloignée de la zone de fractionnement, toutes les zones fonds sont utilisées en série permettant ainsi d'utiliser l'ensemble des étages théoriques de séparation et non ceux d'une seule zone de fond comme dans le mode de réalisation « dit mode de réalisation en parallèle ». Ce mode de réalisation permet également d'opérer les zones de fond selon le mode de réalisation dit « mode de réalisation en parallèle », alternativement en cas de besoin.
Dans ce mode de réalisation en série, une fois nettoyée, la zone de fond la plus éloignée de la zone de fractionnement est rendue opérationnelle et directement connectée en tête de série, avantageusement au fond de la zone de fractionnement et en tête de la première zone de fond qui était auparavant connectée au fond de la zone de fractionnement. La mention « tête de série » suppose la présence d'un système de conduites et de vannes, connues de l'homme du métier, permettant de connecter ladite zone de fond la plus éloignée à la zone de fractionnement et aux autres zones de fond, notamment à la première zone de fond qui était auparavant connectée au fond de la zone de fractionnement.
Lors du passage dans les zones de fond, les fractions de fond sont soumises à un strippage au moyen d'un flux gazeux. Le flux gazeux est injecté à contre-courant dans les zones de fond de façon à entraîner les fractions légères vers la zone de fractionnement. Ces flux gazeux permettent, en effet, de récupérer et de renvoyer vers la zone de fractionnement, les fractions légères entrainées dans la fraction de fond et n'ayant pas été séparées dans la zone de fractionnement.

Le flux gazeux peut être n'importe quelle coupe chimique se vaporisant dans les conditions de température et de pression au point d'injection dans la zone de fond.

Le flux gazeux selon l'invention est avantageusement choisi parmi la vapeur d'eau, de l'hydrogène, de l'azote ou un flux gazeux issu du rebouillage du fond de la zone de fractionnement.

Avantageusement selon l'invention, lorsque les zones de fond sont disposées en série, c'est-à-dire lorsque le procédé selon l'invention est mis en oeuvre selon le mode de réalisation dit « mode de réalisation en série », le flux gazeux est injecté à contre-courant dans la zone de fond la plus éloignée de la zone de fractionnement, puis, le flux gazeux résultant est ensuite envoyé dans les autres zones de fond avant d'être renvoyé dans la zone de fractionnement

### La charge

Les charges du procédé selon l'invention peuvent être issues de brut dit conventionnel (degré API >20°), lourd (degré API compris entre 10 et 20°) ou extra lourd (degré API<10°). La densité de la charge selon l'invention est avantageusement supérieure à 0.6, de préférence supérieure à 0,85, de manière plus préférée supérieure à 0.88.

Les charges du procédé selon l'invention sont avantageusement choisies parmi des charges de pétrole brut, ou des effluents de charge issus de la distillation de pétrole brut et/ou de procédés de raffinage, ou des charges issues de la liquéfaction directe de charbon (H-Coal™) ou issues de la liquéfaction directe de la biomasse lignocellulosique seule ou en mélange avec du charbon. Elles peuvent être notamment choisies parmi les effluents de charges issus de procédés de conversion thermique ou catalytique avec ou sans hydrogène, les résidus atmosphérique, les résidus sous-vide, les huiles désasphaltées, les brais, d'asphaltes en mélange avec un distillat aromatique, d'hydrogénats de charbon, d'huiles lourdes de toutes origines et en particulier issues de sables ou schistes bitumineux, ou leur mélange.

Les procédés de conversion peuvent être des procédés d'hydroconversion en lit bouillonnant, d'unité de craquage catalytique en lit fluidisé, d'unités d'hydrotraitement en lits fixes, de cokage (coker selon la terminologie anglo-saxonne), de cokéfaction retardée (ou delayed coker selon la terminologie anglo-saxonne) ou de viscoréducteur et d'hydro viscoréducteur.

Les charges selon l'invention comprennent de préférence des asphaltènes et des impuretés soufrées et métalliques et peuvent présenter un point d'ébullition supérieur à 20 °C, de préférence supérieur à 180°C, de manière préférée supérieur à 200°C, de manière plus préférée supérieur à 250°C.

La charge traitée par le procédé selon l'invention peut présenter une teneur en métaux supérieure à 10 ppm (partie par million exprimée en masse de métaux par rapport à la masse de charge), de préférence supérieure à 20 ppm, de manière plus préférée supérieure à 50 ppm.

De manière avantageuse, le procédé de fractionnement selon l'invention est mis en oeuvre avec des charges pouvant présenter une teneur en asphaltènes C7 supérieure à 0.5% m/m (pourcentage exprimé en masse d'asphaltènes C7 par rapport à la masse de charge, mesuré selon la méthode NF T60-115), de préférence supérieure à 2% m/m, de manière plus préférée supérieure à 5% m/m; - et/ou un carbone Conradson (également appelé CCR) supérieur à 2% m/m (pourcentage exprimé en masse de CCR par rapport à la masse de charge), de préférence supérieur à 5% m/m, de manière plus préférée supérieur à 10% m/m.

Les charges selon l'invention peuvent être des effluents de charge issus de procédés de craquage thermiques, en particulier des essences issues du craquage catalytique, du craquage catalytique en lit fluide (FCC), d'un procédé de cokéfaction, d'un procédé de viscoréduction, d'un procédé de pyrolyse. Ces charges comprennent des espèces insaturées telles que les monooléfines et les dioléfines qui sont des précurseurs de gomme et présentent un fort risque de colmatage dans les dispositifs de fractionnement.

### Description détaillée des figures

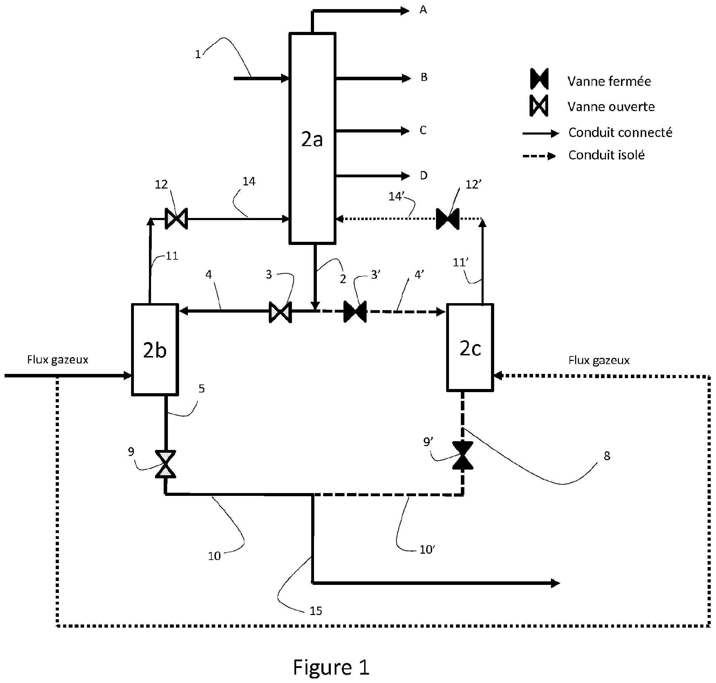

Pour une meilleure compréhension, plusieurs modes de réalisation du procédé sont illustrés par les Figures 1 à 6. Ces modes de réalisation sont donnés à titre d'exemples et ne présentent aucun caractère limitatif. Ces illustrations du procédé ne comportent pas les détails de l'ensemble des composants nécessaires à sa mise en oeuvre. Seuls les éléments nécessaires à la compréhension de l'invention y sont représentés, l'homme du métier étant en capacité de compléter ces représentations pour réaliser et mettre en oeuvre l'invention.

### Mode de réalisation en parallèle

Les figures 1 à 2 décrivent un mode de réalisation du procédé non-conforme à l'invention mis en oeuvre avec un dispositif comprenant une zone de fractionnement et deux zones de fond. Dans ce mode de réalisation, les zones de fond sont disposées en parallèle et opèrent de manière cyclique et successive.
La figure 1 décrit la marche 1 (2a+2b) de ce mode de réalisation selon laquelle la zone de fractionnement et les deux zones de fond opèrent en parallèle.
La charge est envoyée dans la zone de fractionnement 2a par la conduite 1 dans laquelle elle est fractionnée en plusieurs fractions d'intérêt selon leur température d'ébullition (représenté par les flèches A, B, C et D). Ces fractions sont généralement des fractions telles que une fraction gazeuse, une coupe essence, une coupe gazole, une coupe de gazole lourd. La fraction de fond sortant du fond de la zone de fractionnement 2a par la conduite 2 est envoyée vers la zone de fond 2b par le biais de la conduite 4 munie de la vanne 3 ouverte. A l'issue du passage dans la zone de fond 2b, la fraction de fond issue de la zone de fond 2b est envoyée directement par la conduite 5 munie de la vanne ouverte 9 puis par la conduite 10 pour être évacuée par la conduite 15. Pendant la marche 1 (2a+2b) du mode de réalisation du procédé, la zone 2c n'est avantageusement pas connectée au fond de la zone de fractionnement.

Lors du passage dans la zone de fond 2b, les fractions de fond sont avantageusement soumises à un strippage au moyen d'un flux gazeux injecté dans ladite zone de fond 2b à contre-courant de la fraction de fond. Le flux gazeux injecté à contre-courant dans la zone de fond 2b produit un flux gazeux chargé en fractions légères qui est renvoyé dans la zone de fractionnement via la conduite 11 et la conduite 14 munie de la vanne 12 ouverte.

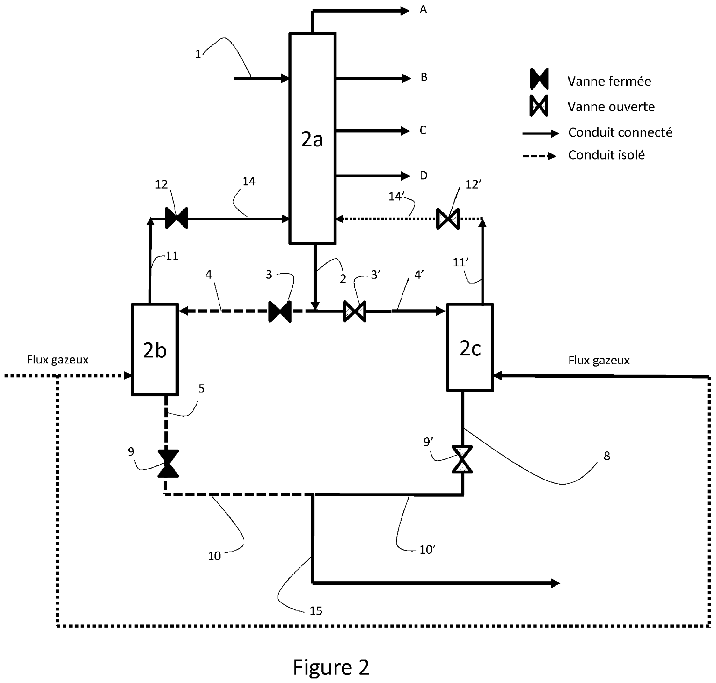

Au bout d'une durée au plus égale au temps de colmatage de la zone de fond 2b, la zone de fond 2b est déconnectée de la zone 2a. Elle est isolée du reste du dispositif par fermeture des vannes 3, 9 et 12, pour être nettoyée (Figure 2). Pendant ce temps, le dispositif du procédé continue à opérer suivant la marche 2 du mode de réalisation du procédé (2a+2c) (Figure 2).

La figure 2 reprend la même nomenclature que celle de la figure 1. Du fait de la déconnection de la zone de fond 2b, la fraction de fond sortant du fond de la zone de fractionnement 2a par la conduite 2 est envoyée vers la zone de fond 2c par le biais de la conduite 4' munie de la vanne 3' ouverte. A l'issue du passage dans la zone de fond 2c, la fraction de fond issue de la zone de fond 2c est envoyée directement par la conduite 8 munie de la vanne ouverte 9' puis par la conduite 10' pour être évacuée par la conduite 15. Lors du nettoyage de la zone de fond 2b, l'injection du flux gazeux dans ladite zone est avantageusement arrêtée.

Lors du passage dans la zone de fond 2c, les fractions de fond sont avantageusement soumises à un strippage au moyen d'un flux gazeux injecté dans ladite zone de fond 2c à contre-courant de la fraction de fond. Le flux gazeux injecté à contre-courant dans la zone de fond 2c produit un flux gazeux chargé en fractions légères qui est renvoyé dans la zone de fractionnement via la conduite 11' et la conduite 14' munie de la vanne 12' ouverte.
Lorsque le nettoyage de la zone de fond 2b est terminée, la zone de fond 2b est rendue opérationnelle et connectée directement au fond de la zone de fractionnement 2a pour opérer de nouveau suivant la marche 1 du mode de réalisation du procédé (2a+2b) décrit ci-dessus en référence à la figure 1 et le processus opératoire est ainsi reproduit à chaque fois que la zone de fond en opération est colmatée ou avant son colmatage. La zone 2c est avantageusement déconnectée du fond de la zone de fractionnement lors de la marche 1 du mode de réalisation du procédé (2a+2b) et nettoyée.
Dans ce premier mode opératoire décrit dans les figures 1 et 2, deux zones de fond en parallèle sont représentées. L'invention n'exclut cependant pas la mise en oeuvre d'une pluralité de zones de fond disposées en parallèle.

### Mode de réalisation en série.

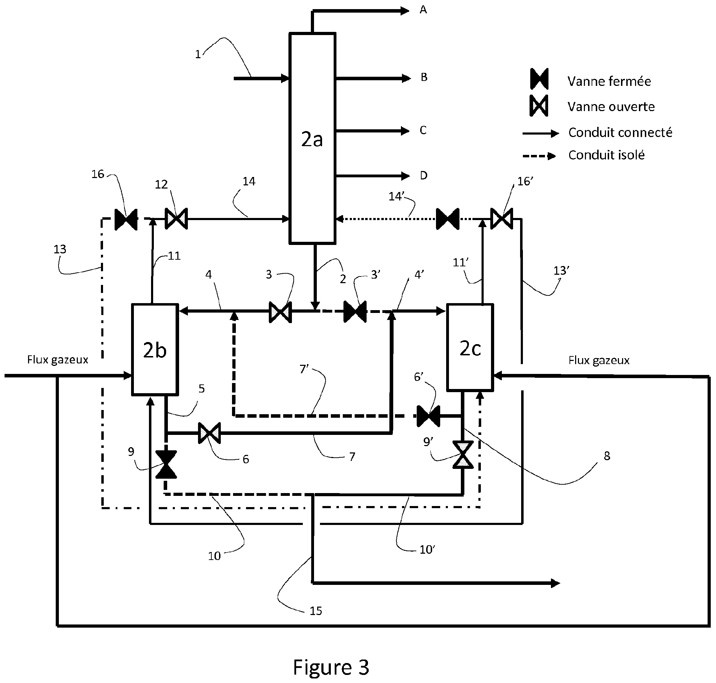

Les figures 3 à 6 décrivent un mode de réalisation du procédé conforme à l'invention mis en oeuvre avec un dispositif comprenant une zone de fractionnement et deux zones de fond. Dans ce mode de réalisation, les zones de fond sont disposées et reliées en série et opèrent de manière cyclique et successive.
La figure 3 décrit la marche 1 du mode de réalisation du procédé selon laquelle la zone de fractionnement et les deux zones de fond opèrent en série selon le mode : 2a+2b+2c.
La charge est envoyée dans la zone de fractionnement 2a par la conduite 1 dans laquelle elle est fractionnée en plusieurs fractions légères d'intérêt selon leur température d'ébullition (représenté par les flèches A, B, C et D). Ces fractions sont généralement des fractions telles que une fraction gazeuse, une coupe essence, une coupe gazole, une coupe de gazole lourd. La fraction de fond sortant du fond de la zone de fractionnement 2a par la conduite 2 est envoyée vers la zone de fond 2b par le biais de la conduite 4 munie de la vanne 3 ouverte. A l'issue du passage dans la zone de fond 2b, ladite fraction de fond passe dans la zone de fond 2c par le biais de la conduite 7 munie de la vanne 6 ouverte et de la conduite 4'. La fraction de fond issue de la zone de fond 2c passe ensuite par la conduite 8 munie de la vanne ouverte 9' puis par la conduite 10' pour être évacuée par la conduite 15.

Lors du passage dans les zones de fond 2b et 2c, les fractions de fond sont avantageusement soumises à un strippage au moyen d'un flux gazeux injecté dans lesdites zones de fond à contre-courant de la fraction de fond. Avantageusement, ledit flux gazeux est uniquement injecté à contre-courant dans la zone de fond 2c de façon à produire un flux gazeux chargé en fractions légères qui est envoyé via la conduite 11' et la conduite 13' munie de la vanne ouverte 16', vers la zone de fond 2b. Dans la zone de fond 2b, ledit flux gazeux entraine davantage de fractions légères et est ensuite renvoyé dans la zone de fractionnement via la conduite 11 et la conduite 14 munie de la vanne 12 ouverte.

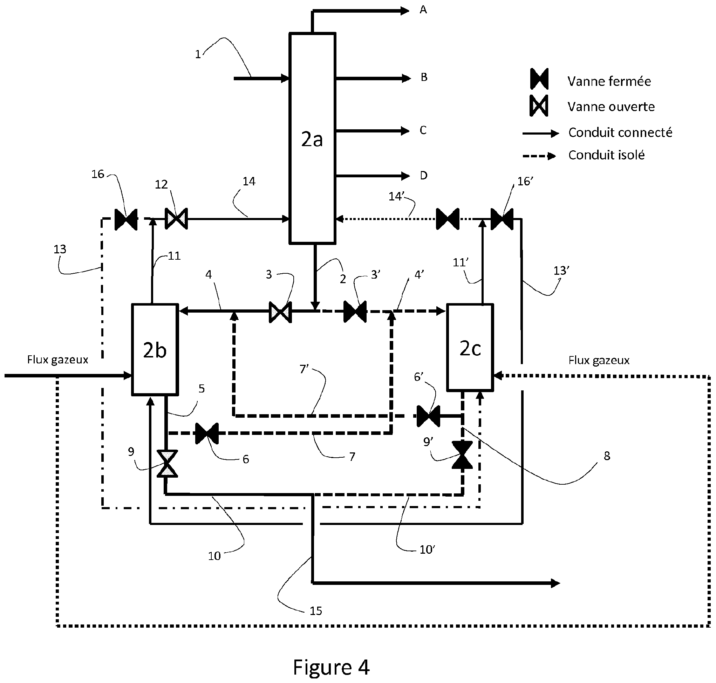

Au bout d'une durée au plus égale au temps de colmatage de la zone de fond 2c, la zone de fond 2c est déconnectée. Cette dernière est isolée du reste du dispositif par la fermeture des vannes 6 9' et 16', pour être nettoyée. Pendant ce temps, le dispositif du procédé continue à opérer suivant la marche 2 du mode de réalisation du procédé (2a+2b) (Figure 4).

La figure 4 reprend la même nomenclature que celle de la figure 3. Du fait de la déconnection de la zone de fond 2c, la fraction de fond issue de la zone de fond 2b est envoyée directement par la conduite 5 munie de la vanne ouverte 9 puis par la conduite 10 pour être évacuée par la conduite 15. Lors du nettoyage de la zone de fond 2c, l'injection du flux gazeux dans ladite zone est avantageusement arrêtée.

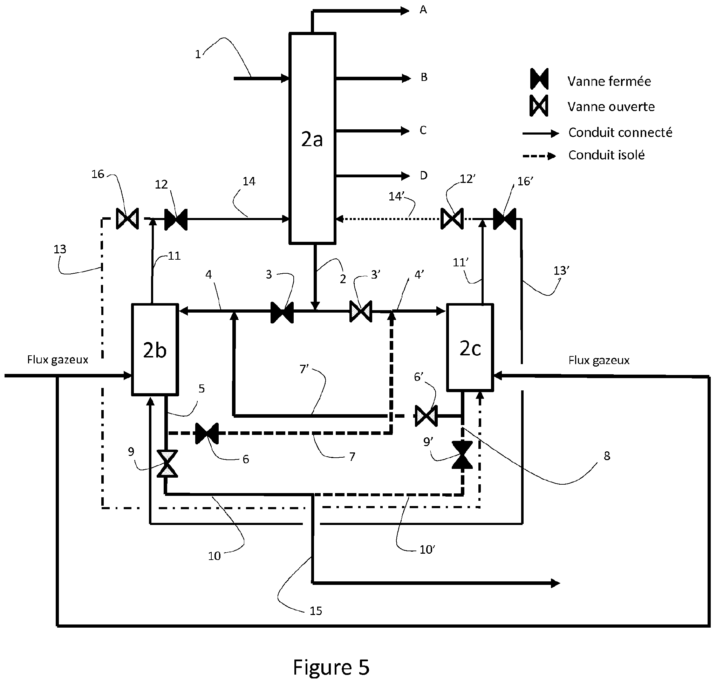

Lorsque le nettoyage de la zone de fond 2c est terminée, la zone de fond 2c est rendue opérationnelle et connectée directement au fond de la zone de fractionnement 2a pour opérer suivant la marche 3 du mode de réalisation du procédé (2a+2c+2b) (Figure 5).

Selon la figure 5, la fraction de fond sortant du fond de la zone de fractionnement 2a par la conduite 2 est envoyée vers la zone de fond 2c par l'intermédiaire de la conduite 4' munie de la vanne ouverte 3'. A l'issue du passage dans la zone de fond 2c, ladite fraction de fond passe dans la zone de fond 2b par le biais de la conduite 7' munie de la vanne 6' ouverte et de la conduite 4. La fraction de fond issue de la zone de fond 2b passe ensuite par la conduite 5 munie de la vanne ouverte 9 puis par la conduite 10 pour être évacuée par la conduite 15.

Lors du passage dans les zones de fond 2c et 2b, les fractions de fond sont avantageusement soumises à un strippage au moyen d'un flux gazeux injecté dans lesdites zones de fond à contre-courant de la fraction de fond. Avantageusement, ledit flux gazeux est uniquement injecté à contre-courant dans la zone de fond 2b de façon à produire un flux gazeux chargé en fractions légères qui est envoyé via la conduite 11 et la conduite 13 munie de la vanne ouverte 16, vers la zone de fond 2c. Dans la zone de fond 2c, ledit flux gazeux entraine davantage de fractions légères et est envoyé dans la zone de fractionnement via la conduite 11' et la conduite 14' munie de la vanne 12' ouverte.

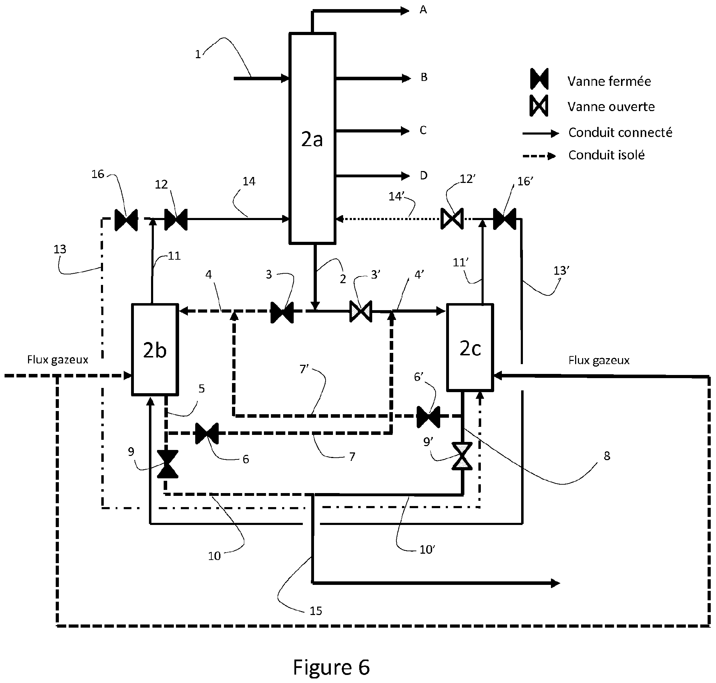

Au bout d'une durée au plus égale au temps de colmatage de la zone de fond 2b, cette dernière est déconnectée. Elle est isolée du reste du dispositif par la fermeture des vannes 6', 9 et 16, pour être nettoyée. Pendant ce temps, le dispositif du procédé continue à opérer suivant la marche 4 du mode de réalisation du procédé (2a+2c) (Figure 6).

La figure 6 reprend la même nomenclature que celle de la figure 5. Du fait de la déconnection de la zone de fond 2b, la fraction de fond issue de la zone de fond 2c passe directement par la conduite 8 munie de la vanne ouverte 9' puis par la conduite 10' pour être évacuée par la conduite 15. Lors du nettoyage de la zone de fond 2b, l'injection du flux gazeux dans ladite zone est avantageusement arrêtée.

Lorsque le nettoyage de la zone de fond 2b est terminée, la zone de fond 2b est rendue opérationnelle et connectée directement au fond de la zone de fractionnement 2a pour opérer de nouveau suivant la marche 1 du mode de réalisation du procédé (2a+2b+2c) tel que décrit dans la figure 3 ci-dessus et le processus opératoire est ainsi reproduit à chaque fois que la zone de fond la plus éloignée de la zone de fractionnement est colmatée.

Dans ce mode de réalisation, il est également possible de mettre en oeuvre une pluralité de fond de zones reliées en série.

### EXEMPLE

Une charge issue d'un procédé d'hydroconversion en lit bouillonnant (RHCK EB) d'un résidu sous-vide (RSV) est envoyée en fractionnement dans une colonne de distillation atmosphérique (ADU).
Les principales caractéristiques de la charge traitée sont résumées dans le tableau 1 ci-dessous.

**Tableau 1 : Caractéristiques de la charge**

| | Charge |
|---|---|
| D15/4^{a} | 0,9237 |
| V100^{b} (mm²/s) | 8 |
| S (% poids) | 0,47 |
| N (ppm poids) | 4036 |
| Ni + V (ppm poids) | 14 |

| | |
|---|---|
| ^{a}D15/4 fait référence à la densité de la charge (masse volumique de la charge à 15°C sur la masse volumique de l'eau à 4°C). ^{b}V100 désigne la viscosité à 100°C. S, N, Ni et V font référence respectivement au soufre, azote, nickel et vanadium. | |

La colonne de distillation atmosphérique (ADU) s'encrasse au bout de 12 mois et nécessite un arrêt pour nettoyage d'une durée de 1,5 mois. En temps normal, une unité classique opérant avec une colonne de distillation atmosphérique (ADU) classique fonctionne 89% du temps avec la colonne de distillation atmosphérique (ADU) en marche, et 11 % du temps avec la colonne de distillation atmosphérique à l'arrêt (en nettoyage).
Le fractionnement de la charge est mis en oeuvre suivant deux modes de réalisation, mode de réalisation dit « en parallèle » (non-conforme à l'invention) et mode de réalisation dit « en série » (conforme à l'invention) et un mode de réalisation classique comparatif selon l'art antérieur.

### Mode de réalisation dit « en parallèle » (non-conforme à l'invention) :

Le dispositif mis en oeuvre comprend une colonne de distillation connectée à deux zones de fonds permutables. Le dispositif est mis en fonctionnement continuellement. Les deux zones de fond permutables sont disposées en parallèle. Au moins une première des zones de fond est connectée au fond de la colonne de distillation de façon à pouvoir fonctionner avec ladite colonne de distillation de manière cyclique et successive pendant une durée au plus égale à leur temps de colmatage, de sorte que avant le colmatage de la première zone de fond, celle-ci est déconnectée pour être nettoyée pendant que le procédé de fractionnement de la charge continue avec la deuxième zone de fond.
Le nombre de plateaux du dispositif de séparation (colonne de distillation + fond de zone) est égal à 20.

### Mode de réalisation dit « en série» (conforme à l'invention) :

Le dispositif mis en oeuvre comprend une colonne de distillation reliée à deux zones de fond permutables connectées entre elles en série par des conduites munies de vannes. Le dispositif est mis en fonctionnement continuellement.
Au moins une première zone de fond est connectée au fond de la colonne de distillation, de manière à pouvoir opérer de manière cyclique et successive pendant une durée au plus égale au temps de colmatage de la zone de fond la plus éloignée de la colonne de distillation selon un processus opératoire tel que lorsque la zone de fond la plus éloignée de la colonne de distillation est colmatée ou avant son colmatage, celle-ci est déconnectée pour être nettoyée, pendant que le procédé de fractionnement de la charge continue avec seulement la première zone de fond. Lorsque le nettoyage de ladite zone de fond est terminée, celle-ci est rendue opérationnelle et directement connectée en tête de série au fond de la colonne de distillation et en tête de ladite première zone de fond qui devient par conséquent la zone de fond la plus éloignée de la colonne de distillation, le processus opératoire étant reproduit à chaque fois que la zone de fond la plus éloignée de la colonne de distillation est colmatée ou avant son colmatage.

Le nombre de plateaux du dispositif de séparation (colonne de distillation + fond de zone) est égal à 20.

### Mode de réalisation classique (non conforme à l'invention) :

Le dispositif mis en oeuvre comprend uniquement une colonne de distillation atmosphérique traditionnelle. Périodiquement, la colonne est nettoyée entrainant sa mise à l'arrêt et la mise à l'arrêt de l'unité d'hydroconversion en amont. Le tableau 2 fournit les éléments de comparaison entre les trois séparations.

**Tableau 2 : Comparaison des résultats économiques**

| | Mode de réalisation « en parallèle » | Mode de réalisation « en série» | Mode de réalisation classique |
|---|---|---|---|
| Température de fond de colonne globale (°C) | 360 | 360 | 360 |
| Nombre de plateaux théoriques | 20 | 20 | 20 |
| Pression en tête (bar absolu) | 2,3 | 2,3 | 2,3 |
| ADU en marche sur une année (temps) (%) | 100 | 100 | 89 |
| ADU à l'arrêt sur une année (temps) (%) | 0 | 0 | 11 |
| Investissement ISBL^{a} (M$) | Base0 + 1,4 | Base0 + 1,1 | Base0 |
| Valeur Actuel Nette^{b} (M$) | Base1 + 280 | Base1 + 282 | Base1 |
| Taux Interne de Rentabilité^{c} (%) | Base2 + 1,5 | Base2 + 1,5 | Base2 |
| Temps de retour^{d} (années) | Base3 - 1 | Base3 - 1 | Base3 |

| | | | |
|---|---|---|---|
| ^{a}L'ISBL (Inside Battery Limits) désigne les investissements en limites des unités de fabrication. ^{b} La Valeur Actuel Nette (Net Present Value selon la terminologie anglo-saxonne) fait référence à la somme des valeurs actuelles des flux de trésorerie associés à un projet. ^{c} Le taux interne de Rentabilité (Internal Rate of Return selon la terminologie anglo-saxonne) est le taux maximum auquel les revenus du projet permettent de rémunérer le capital investi sans que le projet ne devienne déficitaire. ^{d} Le temps de retour (Pay Out Time selon la terminologie anglo-saxonne) est la durée nécessaire pour que les revenus d'un projet permettent de rembourser l'investissement initial. | | | |

L'invention permet un gain en opérabilité notable en s'affranchissant de l'arrêt total de l'unité et permet de garantir un gain économique substantiel.

## Revendications

1. Procédé de fractionnement de charges d'hydrocarbures mettant en oeuvre au moins une zone de fractionnement munie d'internes de séparation, et au moins deux zones de fond permutables connectées entre elles en série, dans equel au moins une première zone de fond est connectée au fond de la zone de fractionnement, de manière à pouvoir opérer de manière cyclique et successive pendant une durée au plus égale au temps de colmatage de la zone de fond la plus éloignée de la zone de fractionnement selon un processus opératoire tel que lorsque la zone de fond la plus éloignée de la zone de fractionnement est colmatée ou avant son colmatage, celle-ci est déconnectée pour être nettoyée, pendant que le procédé de fractionnement de la charge continue avec la ou les autres zones de fond précédant ladite zone de fond, et lorsque le nettoyage de ladite zone de fond est terminée, celle-ci est rendue opérationnelle et directement connectée en tête de série, le processus opératoire étant reproduit à chaque fois que la zone de fond la plus éloignée de la zone de fractionnement est colmatée ou avant son colmatage,
dans lequel,
les zones de fond sont aptes à recevoir des fractions de fond de la charge ayant une température d'ébullition supérieure à la température de l'étage théorique du fond de la zone de fractionnement,
lors du passage dans les zones de fond, les fractions de fond sont soumises à un strippage au moyen d'un flux gazeux.

2. Procédé selon la revendication 1 dans lequel les zones de fond sont munies d'internes de séparation tels que des plateaux, des garnissages structurés ou non structurés.

3. Procédé selon l'une des revendications précédentes dans lequel les fractions de fond de la charge ont une température d'ébullition supérieure à la température de l'étage théorique du fond de la zone de fractionnement.

4. Procédé selon la revendication 3 dans lequel les fractions de fond de la charge ont une température d'ébullition au moins supérieure à 40 °C dans des conditions de pression correspondant à la pression atmosphérique.

5. Procédé selon l'une des revendications précédentes dans lequel le flux gazeux est injecté à contre-courant dans les zones de fond de façon à entrainer les fractions légères vers la zone de fractionnement.

6. Procédé selon l'une des revendications précédentes dans lequel le flux gazeux est une coupe chimique se vaporisant dans les conditions de température et de pression au point d'injection dans la zone de fond.

7. Procédé selon l'une des revendications précédentes dans lequel le flux gazeux est choisi parmi la vapeur d'eau, de l'hydrogène, de l'azote ou un flux gazeux issu du rebouillage du fond de la zone de fractionnement.

8. Procédé selon l'une des revendications précédentes dans lequel lorsque les zones de fond sont disposées en série, le flux gazeux est injecté à contre-courant dans la zone de fond la plus éloignée de la zone de fractionnement, puis, le flux gazeux résultant est ensuite envoyé dans les autres zones de fond avant d'être renvoyé dans la zone de fractionnement.

9. Procédé selon l'une des revendications précédentes dans lequel la charge est choisie parmi des charges de pétrole brut, ou des effluents de charge issus de la distillation de pétrole brut et/ou de procédés de raffinage, ou des charges issues de la liquéfaction directe de charbon ou issues de la liquéfaction directe de la biomasse lignocellulosique seule ou en mélange avec du charbon.

10. Procédé selon l'une des revendications précédentes dans lequel la charge est choisie parmi les effluents de charge issus de procédés de craquage thermiques, en particulier des essences issues du craquage catalytique, du craquage catalytique en lit fluide, d'un procédé de cokéfaction, d'un procédé de viscoréduction, d'un procédé de pyrolyse.

## Patentansprüche

1. Verfahren zur Fraktionierung von Kohlenwasserstoffchargen unter Verwendung mindestens eines Fraktionierungsbereichs, der mit Trenneinbauten und mindestens zwei auswechselbaren Bodenbereichen, die miteinander in Reihe geschaltet sind, versehen ist, wobei mindestens ein erster Bodenbereich mit dem Boden des Fraktionierungsbereichs verbunden ist, damit er für eine Dauer, die höchstens gleich der Verstopfungszeit des von dem Fraktionierungsbereich am weitesten entfernten Bodenbereichs ist, gemäß einem Betriebsprozess zyklisch und schrittweise arbeiten kann, so dass, wenn der am weitesten von dem Fraktionierungsbereich entfernte Bodenbereich verstopft ist oder vor dessen Verstopfung, dieser zur Reinigung abgetrennt wird, während das Verfahren zur Fraktionierung des Einsatzes mit dem oder den anderen Bodenbereichen, die diesem Bodenbereich vorausgehen, weiterläuft, und wenn die Reinigung des Bodenbereichs beendet ist, dieser einsatzfähig gemacht und direkt am Kopf der Reihe angeschlossen wird, wobei der Betriebsprozess immer dann wiederholt wird, wenn der am weitesten von dem Fraktionierungsbereich entfernte Bodenbereich verstopft ist oder vor dessen Verstopfung,
wobei,
die Bodenbereiche geeignet sind, Sumpffraktionen der Charge aufzunehmen, die eine Siedetemperatur oberhalb der Temperatur der theoretischen Stufe des Bodens des Fraktionierungsbereichs aufweise,
die Sumpffraktionen während des Durchgangs durch die Bodenbereiche mithilfe eines gasförmigen Stroms abgezogen werden.

2. Verfahren nach Anspruch 1, wobei die Bodenbereiche mit Trenneinbauten, wie beispielsweise Platten, strukturierten oder nicht strukturierten Packungen, versehen sind.

3. Verfahren nach einem der vorhergehenden Ansprüche, wobei die Sumpffraktionen des Einsatzes eine Siedetemperatur oberhalb der Temperatur der theoretischen Stufe des Bodens des Fraktionierungsbereichs aufweise.

4. Verfahren nach Anspruch 3, wobei die Sumpffraktionen des Einsatzes eine Siedetemperatur von mindestens mehre als 40 °C unter Druckbedingungen aufweisen, die dem Atmosphärendruck entsprechen.

5. Verfahren nach einem der vorhergehenden Ansprüche, wobei der Gasstrom als Gegenstrom derart in die Bodenbereiche eingespritzt wird, dass die leichten Fraktionen in den Fraktionierungsbereich mitgeführt werden.

6. Verfahren nach einem der vorhergehenden Ansprüche, wobei der Gasstrom ein chemischer Schnitt ist, der unter den Temperatur- und Druckbedingungen am Einspritzpunkt in den Bodenbereich verdampft.

7. Verfahren nach einem der vorhergehenden Ansprüche, wobei der Gasstrom ausgewählt ist aus Wasserdampf, Wasserstoff, Stickstoff oder einem Gasstrom aus dem Aufsieden des Bodens des Fraktionierungsbereichs.

8. Verfahren nach einem der vorhergehenden Ansprüche, wobei, wenn die Bodenbereiche in Reihe angeordnet sind, der Gasstrom als Gegenstrom in den von dem Fraktionierungsbereich am weitesten entfernten Bodenbereich eingespritzt wird und der resultierende Gasstrom anschließend in die anderen Bodenbereiche geschickt wird, bevor er in den Fraktionierungsbereich geschickt wird.

9. Verfahren nach einem der vorhergehenden Ansprüche, wobei die Charge ausgewählt ist aus Rohölchargen, oder Abflüssen aus der Rohöldestillation und/oder Verfahren zur Raffination, oder Chargen aus der direkten Verflüssigung von Kohle oder aus der direkten Verflüssigung von lignocellulosehaltiger Biomasse, allein oder als Gemisch mit Kohle.

10. Verfahren nach einem der vorhergehenden Ansprüche, wobei die Charge ausgewählt ist aus Abflüssen aus Verfahren zum thermischen Cracken, insbesondere Benzinen aus dem katalytischen Cracken, dem katalytischen Cracken in der Wirbelschicht, aus einem Verkokungsverfahren, einem Visbreaking-Verfahren, einem Pyrolyseverfahren.

## Claims

1. A process for fractionating hydrocarbon feeds employing at least one fractionation zone provided with separator internals, and at least two switchable bottom zones connected together in series, and at least one first bottom zone is connected to the bottom of the fractionation zone in a manner such as to be able to operate in a cyclic and successive manner for a period at most equal to the plugging period of the bottom zone furthest from the fractionation zone in accordance with an operating protocol wherein, when the bottom zone furthest from the fractionation zone becomes plugged or before it becomes plugged, it is disconnected for cleaning, while the feed fractionation process continues with the other bottom zone or zones preceding said bottom zone, and when cleaning of said bottom zone is finished, it is rendered operational and connected directly to the head of the series, the operating protocol being repeated each time the bottom zone furthest from the fractionation zone becomes plugged or before it becomes plugged,
in which,
the bottom zones are capable of receiving bottom fractions of the feed with a boiling point greater than the temperature of the theoretical stage at the bottom of the fractionation zone,
during passage through the bottom zones, the bottom fractions undergo stripping by means of a gas stream.

2. The process as claimed in claim 1, in which the bottom zones are provided with separator internals such as plates, or structured or unstructured packing.

3. The process as claimed in one of the preceding claims, in which the bottom fractions of the feed have a boiling point greater than the temperature of the theoretical stage at the bottom of the fractionation zone.

4. The process as claimed in claim 3, in which the bottom fractions of the feed have a boiling point of at least more than 40°C under the pressure conditions corresponding to atmospheric pressure.

5. The process as claimed in one of the preceding claims, in which the gas stream is injected as a counter-current into the bottom zones so as to entrain the light fractions towards the fractionation zone.

6. The process as claimed in one of the preceding claims, in which the gas stream is a chemical cut which vaporizes under the temperature and pressure conditions at the point of injection into the bottom zone.

7. The process as claimed in one of the preceding claims, in which the gas stream is selected from steam, hydrogen, nitrogen or a gas stream obtained from reboiling the bottom of the fractionation zone.

8. The process as claimed in one of the preceding claims, in which, when the bottom zones are disposed in series, the gas stream is injected as a counter-current into the bottom zone furthest from the fractionation zone then the resulting gas stream is subsequently sent to the other bottom zones before being returned to the fractionation zone.

9. The process as claimed in one of the preceding claims, in which the feed is selected from crude oil feeds or from feed effluents obtained from the distillation of crude oil and/or from refining processes, or from feeds obtained from the direct liquefaction of coal or obtained from the direct liquefaction of lignocellulosic biomass, alone or as a mixture with coal.

10. The process as claimed in one of the preceding claims, in which the feed is selected from feed effluents obtained from thermal cracking processes, in particular from gasolines obtained from catalytic cracking, from fluid catalytic cracking, from a coking process, from a visbreaking process, or from a pyrolysis process.
